# EUROPEAN PATENT SPECIFICATION

(11) **EP 1 936 883 B1**
(45) Date of publication and mention of the grant of the patent: **22.02.2012**
(21) Application number: 06804936.0
(22) Date of filing: 16.10.2006
(51) Int. Cl.: H04L 12/56

(54) **SERVICE PROVISIONING METHOD AND SYSTEM THEREOF**
DIENSTBEREITSTELLUNGSVERFAHREN UND SYSTEM DAFÜR
PROCEDE DE PRESTATION DE SERVICE ET SYSTEME DE CELUI-CI

(30) Priority: 20.10.2005 CN 200510100650
(43) Date of publication of application: 25.06.2008
(73) Proprietor: Huawei Technologies Co., Ltd., Longgang District, Shenzhen Guangdong 518129 (CN)
(72) Inventor: XIONG, Wei, Shenzhen Guangdong_518129 (CN); CHEN, Yuanxiang, Shenzhen Guangdong_518129 (CN); LIU, Chenglong, Shenzhen Guangdong_518129 (CN); LAI, Xiaming, Shenzhen Guangdong_518129 (CN)
(74) Representative: Thun, Clemens
(86) International application number: PCT/CN2006/002715
(87) International publication number: WO 2007/045157

(56) References cited:
- EP-A- 0 917 328
- EP-A- 1 361 702
- CN-A- 1 248 113
- CN-A- 1 503 530
- CN-A- 1 588 923
- US-A1- 2003 172 144

## Description

### Field of the Invention

The invention relates to the Next Generation Network NGN technology, and in particular, to a method and system for service provision.

### Background of the Invention

Next Generation Network may provide a variety of services including telecommunication services such as Voice Over Internet Protocol VOIP, and IP television IPTV These services are borne over IP networks. Generally, a terminal may obtain the IP address of the terminal via Dynamic Host Configuration DHCP or Point to Point Protocol Over Ethernet PPPOE, and send a service request to a service server (e.g. an Application Service Provider, ASP). The service server may provide a corresponding service to the terminal when receiving the service request sent from the terminal.

Generally, when a user wishes to apply for a service, such as VOIP or IPTV the user is required to register the service to the network side, and obtain a service identifier and a password. In addition, the network side is required to configure the service server correspondingly, and notify relevant personnel to go to the user's resident to configure relevant service parameters in the terminal of the user. After the above configuration, the user may receive the service by use of the service identifier and password.

However, as user side devices, the terminals are numerous in number, are distributed through very wide geographical areas, and are of a variety of access types. Accordingly, the service that the relevant personnel visit each user may incur a very large cost of the operators. Therefore, to put services into operation rapidly, automatic service provision has attracted much attention of the operators. In addition, Because of the lack of an authentication process in the method of obtaining an IP address via DHCP, an illegal user may also obtain an IP address via the terminal. This may give an illegal user a chance to attack the network by maliciously exhausting the IP address resources. Therefore, the security of automatic IP address acquisition via DHCP has become an important issue in service provision.
EP-A-0 917 328 (LUCENT TECHNOLOGIES INC [US]) 19 May 1999 (1999-05-19) discloses a wireless data network which provides communications with a Pier to Pier Protocol server. A home network includes a home mobile switching center and a wireless end system, the home mobile switching center including a home registration server and a home inter-working function, the wireless end system including an end registration agent, the end registration agent being coupled to the home registration server.

### Summary of the Invention

In view of the above, an object of the invention is to provide a method and system for service provision, so as to provide services automatically.

To achieve the above object, the method for service provision according to the invention is as follows:

A service server stores a mapping relationship between a physical address of a terminal and service information of a terminal user. The method includes:
A. sending, by the terminal, a service request to the service server,
B. when receiving the service request from the terminal, determining, by the service server, a service applied for by the terminal user according to the physical address of the terminal and the mapping relationship between the physical address of the terminal and the service information of the terminal user.

Before the step A, the method may further include: obtaining, by the terminal, an Internet Protocol address of the terminal and an Internet Protocol address of the service server,

The step A may include: sending, by the terminal, a service request, carrying the Internet Protocol address of the terminal, to the service server according to the Internet Protocol address of the service server,

Before determining by the service server a service applied for by the terminal user, the step B may further include: determining, by the service server, the physical address of the terminal initiating the service request according to the Internet Protocol address of the terminal.

Obtaining by the terminal an Internet Protocol address of the terminal may include:
initiating, by the terminal, a dynamic host configuration protocol request after powered on, to request to allocate an Internet Protocol address;
when receiving the dynamic host configuration protocol request, inserting, by a broadband remote access server, the physical address of the terminal into the dynamic host configuration protocol request, and sending the dynamic host configuration protocol request with the physical address of the terminal to a dynamic host configuration protocol server;
when receiving the dynamic host configuration protocol request, parsing, by the dynamic host configuration protocol server, the physical address of the terminal from the dynamic host configuration protocol request, allocating an Internet Protocol address for the terminal, generating a mapping relationship between the physical address and the Internet Protocol address of the terminal, and sending the allocated Internet Protocol address to the terminal.

Before the step A, the method may further include: obtaining, by the terminal, a terminal configuration file to complete an initial configuration.

The method may further include: configuring the mapping relationship between the physical address and the Internet Protocol address of the terminal on the dynamic host configuration protocol server;

Allocating the Internet Protocol address for the terminal may include: allocating, by the dynamic host configuration protocol server, the Internet Protocol address for the terminal according to the configured mapping relationship between the physical address and the Internet Protocol address of the terminal.

Or, allocating the Internet Protocol address for the terminal may include: randomly selecting, by the dynamic host configuration protocol server, an available Internet Protocol address for the terminal.

The method may further include: storing the mapping relationship between the physical address of the terminal and the service information of the terminal user on the dynamic host configuration protocol server;

Before allocating the Internet Protocol address for the terminal, the method may further include: parsing, by the dynamic host configuration protocol server, the physical address of the terminal from the dynamic host configuration protocol request, and judging whether the physical address of the terminal is contained in the mapping relationship between the physical address of the terminal and the service information of the terminal user stored on the dynamic host configuration protocol server; if the physical address of the terminal is contained in the mapping relationship, the dynamic host configuration protocol server allocates the Internet Protocol address for the terminal, if the physical address of the terminal is not contained in the mapping relationship, the dynamic host configuration protocol server does not allocate the Internet Protocol address for the terminal.

Obtaining by the terminal the Internet Protocol address of the service server may include: when receiving the dynamic host configuration protocol request, determining, by the dynamic host configuration protocol server, the Internet Protocol address of the service server, and sending the Internet Protocol address of the service server to the terminal.

The method may further include: configuring a mapping relationship between the physical address of the terminal and the Internet Protocol address of the service server on the dynamic host configuration protocol server;

Determining the Internet Protocol address of the service server may include: parsing, by the dynamic host configuration protocol server, the physical address of the terminal from the dynamic host configuration protocol request, determining the Internet Protocol address of the service server according to the parsed physical address of the terminal and the mapping relationship between the physical address of the terminal and the Internet Protocol address of the service server.

The method may further include: configuring a unified Internet Protocol address of service servers on the dynamic host configuration protocol server;

Determining the Internet Protocol address of the service server may include: selecting, by the dynamic host configuration protocol server, the unified Internet Protocol address of service servers.

The method may further include: sending, by the dynamic host configuration protocol server, the generated mapping relationship between the physical address and the Internet Protocol address of the terminal to the service server;

Determining by the service server the physical address of the terminal may include: determining, by the service server, the physical address of the terminal initiating the service request, according to the Internet Protocol address of the terminal carried in the service request and the mapping relationship between the physical address and the Internet Protocol address of the terminal sent from the dynamic host configuration protocol server.

Or, determining by the service server the physical address of the terminal may include: requesting, by the service server, the dynamic host configuration protocol server to provide the physical address of the terminal corresponding to the Internet Protocol address of the terminal carried in the service request.

Obtaining by the terminal the terminal configuration file may include:
when receiving the dynamic host configuration protocol request, determining, by the dynamic host configuration protocol server, an Internet Protocol address of a network management server, and sending the Internet Protocol address of the network management server to the terminal;
when receiving the Internet Protocol address of the network management server, sending, by the terminal, a request to the network management server, requesting the network management server to provide the terminal configuration file;
when receiving the request sent from the terminal, returning, by the network management server, the terminal contiguration tile to the terminal.

The method may further include: configuring a mapping relationship between the physical address of the terminal and the Internet Protocol address of the network management server on the dynamic host configuration protocol server;

Determining the Internet Protocol address of the network management server may include: parsing, by the dynamic host configuration protocol server, the physical address of the terminal from the dynamic host configuration protocol request, determining the Internet Protocol address of the network management server according to the parsed physical address of the terminal and the mapping relationship between the physical address of the terminal and the Internet Protocol address of the network management server.

The method may further include: configuring a unified Internet Protocol address of network management servers on the dynamic host configuration protocol server;

Determining the Internet Protocol address of the network management server may include: selecting, by the dynamic host configuration protocol server, the unified Internet Protocol address of network management servers.

The method may further include: storing a mapping relationship between the physical address of the terminal and the terminal configuration file on the network management server;

Returning the terminal configuration file to the terminal may include: determining, by the network management server, the terminal configuration file corresponding to the terminal according to the physical address of the terminal and the mapping relationship between the physical address of the terminal and the terminal configuration file stored on the network management server, and sending the terminal configuration file to the terminal.

The request requesting the network management server to provide the terminal configuration file may carry the Internet Protocol address of the terminal;

Before returning the terminal configuration tile to the terminal, the method may further include: determining, by the network management server, the physical address of the terminal initiating the request according to the Internet Protocol address of the terminal carried in the request.

The method may further include: sending, by the dynamic host configuration protocol server, the generated mapping relationship between the physical address and the Internet Protocol address of the terminal to the network management server;

Determining by the network management server the physical address of the terminal may include: determining, by the network management server, the physical address of the terminal initiating the request according to the Internet Protocol address of the terminal carried in the request and the mapping relationship between the physical address and the Internet Protocol address of the terminal sent from the dynamic host configuration protocol server.

Or, determining by the network management server the physical address of the terminal may include: requesting, by the network management server, the dynamic host configuration protocol server to provide the physical address of the terminal corresponding to the Internet Protocol address of the terminal carried in the request.

When returning the terminal configuration file to the terminal, the method may further include: sending, by the network management server, an Internet Protocol address of the service server to the terminal.

The terminal may be a set top box STB, or an integrated access device IAD, or a home gateway HGW, or a network telephone Ephone, or a personal computer PC, or any other next generation network terminal.

A system for service provision according to the invention may include: a terminal and a service server,

The terminal is adapted to send a service request to the service server, and receive a service provided by the service server;
the service server is adapted to store a mapping relationship between a physical address of the terminal and service information of a terminal user, receive the service request sent from the terminal, determine a service applied for by the terminal user according to the physical address of the terminal and the mapping relationship between the physical address of the terminal and the service information of the terminal user, and provide the service to the terminal.

The service request may include an Internet Protocol address of the terminal;

The service server is further adapted to determine the physical address of the terminal initiating the service request according to the Internet Protocol address of the terminal carried in the service request.

The system may further include: a dynamic host configuration protocol server and a broadband remote access server,
the terminal is further adapted to initiate a dynamic host configuration protocol request, requesting to allocate an Internet Protocol address, and receive the Internet Protocol address of the terminal sent from the dynamic host configuration protocol server,
the broadband remote access server is adapted to receive the dynamic host configuration protocol request initiated by the terminal, insert the physical address of the terminal into the dynamic host configuration protocol request, and send the dynamic host configuration protocol request with the physical address of the terminal to the dynamic host configuration protocol server,
the dynamic host configuration protocol server is adapted to receive the dynamic host configuration protocol request, parse the physical address of the terminal from the dynamic host configuration protocol request, allocate an Internet Protocol address for the terminal, generate a mapping relationship between the physical address and the Internet Protocol address of the terminal, and send the allocated Internet Protocol address to the terminal.

The system may further include: a network management server,
the terminal is further adapted to send a request to the network management server requesting the network management server to provide a terminal configuration file, receive the terminal configuration file sent from the network management server, to complete an initial configuration;
the network management server is adapted to receive the request sent from the terminal, and return the terminal configuration file to the terminal.

The dynamic host configuration protocol server may be further adapted to authenticate validity of the terminal.

The dynamic host configuration protocol server may be further adapted to determine an Internet Protocol address of the service server when receiving the dynamic host configuration protocol request, and send the determined Internet Protocol address of the service server to the terminal;
the terminal may be further adapted to receive the Internet Protocol address of the service server sent from the dynamic host configuration protocol server.

The dynamic host configuration protocol server may be further adapted to determine an Internet Protocol address of the network management server, and send the determined Internet Protocol address of the network management server to the terminal;
the terminal may be further adapted to receive the Internet Protocol address of the network management server sent from the dynamic host configuration protocol server.

The network management server may be further adapted to store a mapping relationship between the physical address of the terminal and the terminal configuration file, determine the terminal configuration file corresponding to the terminal according to the physical address of the terminal and the mapping relationship between the physical address of the terminal and the terminal configuration file stored on the network management server.

The request requesting the network management server to provide the terminal configuration file may carry the Internet Protocol address of the terminal;
the network management server may be further adapted to determine the physical address of the terminal initiating the request according to the Internet Protocol address of the terminal carried in the request.

The network management server may be further adapted to send an Internet Protocol address of the service server to the terminal;
the terminal may be further adapted to receive the Internet Protocol address of the service server sent from the network management server.

The terminal may be a set top box STB, or an integrated access device IAD, or a home gateway HGW, or a network telephone Ephone, or a personal computer PC, or any other next generation network terminal.

As can be seen from the above solutions, in the invention, after a terminal is powered on, a service server may provides services automatically according to a mapping relationship between the preconfigured physical address of the terminal and service information of a terminal user, without any human intervention during the whole process of service provision. In this way, the maintenance cost of the operators may be saved greatly. In addition, when the terminal tries to obtain an IP address via DHCHP, the DHCP server may authenticate the validity of the terminal, and allocate the IP address only if the authentication is passed. In this way, the problem that an illegal user may attack o the network by maliciously exhausting the IP address resources may be avoided. Therefore, the security in obtaining an IP address via DHCP may be improved, and the IP address resources may be saved.

### Brief Description of the Drawings

Figure 1 is a schematic diagram illustrating a structure of a system for service provision according to the invention;

Figure 2 is a schematic diagram illustrating a structure of a system for service provision according to a first embodiment of the invention

Figure 3 is a flow chart illustrating a method for service provision according to the first embodiment of the invention;

Figure 4 is a schematic diagram illustrating a structure of a system for service provision according to a second embodiment of the invention; and

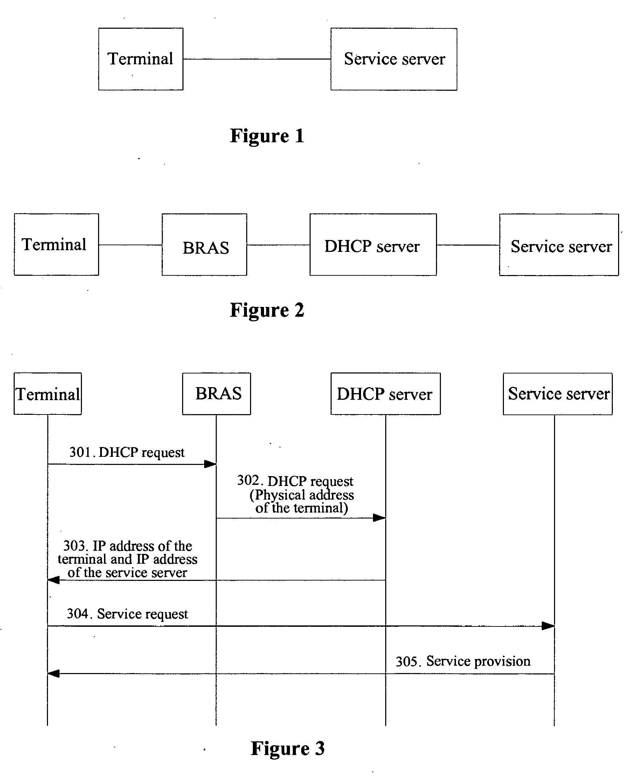

Figure 3 is a flow chart illustrating a method for service provision according to the second embodiment of the invention.

### Detailed Description of the Embodiments

To make the object, the technical solutions and advantages of the invention better understood, some embodiments of the invention are described below in conjunction with the accompanying drawings.

The basic concept of a method for service provision according to the invention lies in that, a mapping relationship between a physical address of a terminal and service information of a terminal user is generated on a service server. When receiving a service request from the terminal, the service server may determine a service applied for by the terminal user according to the mapping relationship between the physical address of the terminal and the service information of the terminal user, and provide the service to the terminal.

Figure 1 illustrates a system for service provision, corresponding to the above method for service provision. As shown in Figure 1, the system includes a terminal and a service server. The terminal is adapted to send a service request to the service server, and receive a service provided by the service server. The service server is adapted to store a mapping relationship between a physical address of the terminal and service information of a terminal user, receive the service request sent from the terminal, determine a service applied for by the terminal user according to the mapping relationship between the physical address of the terminal and the service information of the terminal user, and provide the service to the terminal.

The terminal may be a Set Top Box STP, an Integrate Access Device IAD, a Home Gateway HGW, a network telephone Ephone, a personal computer PC or any other NGN terminal.

The physical address of the terminal may be determined according to network planning and the resident address of the terminal user. The format of the physical address may be "node identifier + frame number/slot number/sub-slot number/port number + [vpi,vci] + [vlan]". If concepts of frames and sub-slots are not available for some devices, the corresponding positions in the physical address may be filled with "0". For example, supposing the physical address of a terminal is "bantianMA5100atm 0/1/0/1:0.35", then the node identifier is "bantianMA5100", the frame number is "0", the slot number is "1", the sub-slot number is "0", the port number is "1", VPI is "0", and VCI is "35".

The terminal according to the invention may be classified into two types, i.e. terminal with initial configuration and terminal without initial configuration. Some embodiments of the invention are described below, in which the above two types of terminal are utilized respectively.

*Embodiment 1*

Figure 2 illustrates a system for service provision including a terminal with an initial configuration. As shown in Figure 2, the system for service provision may further include a Broadband Remote Access Server BRAS and a Dynamical Host Configuration Protocol DHCP server. The terminal is further adapted to initiate a DHCP request, requesting to allocate an IP address, and receive the IP address of the terminal and an IP address of the service server from the DHCP server. BRAS is adapted to receive the DHCP request from the terminal, insert the physical address of the terminal into the DHCP request, and send the DHCP request with the physical address of the terminal to the DHCP server. The DHCP server is adapted to receive the DHCP request, allocate the IP address for the terminal, determine the IP address of the service server, and send the allocated IP address of the terminal and the determined IP address of the service server to the terminal.

Figure 3 illustrates a method for service provision according to the embodiment. The method is described below in conjunction with the system as shown in Figure 2. As shown in Figure 3, the method is as follows.

In step 301, after powered on, the terminal automatically initiates a DHCP request, requesting to allocate an IP address.

In step 302, when receiving the DHCP request, the BRAS inserts the physical address of the terminal into the DHCP request (for example, the physical address of the terminal may be inserted into "OPTIONS" of the DHCP request), and send the DHCP request with the physical address of the terminal to the DHCP server.

In step 303, when receiving the DHCP request, the DHCP server parses the physical address of the terminal from the DHCP request, allocates an IP address for the terminal, determines an IP address of the service server, and sends the IP address of the terminal and the IP address of the service server to the terminal. In addition, the DHCP server generates a mapping relationship between the physical address and the IP address of the terminal, and sends the mapping relationship between the physical address and the IP address of the terminal to the service server.

If a mapping relationship between the physical address of the terminal and the IP address of the service server is configured on the DHCP server, the DHCP server may find the IP address of the service server according to the parsed physical address of the terminal and the mapping relationship between the physical address of the terminal and the IP address of the service server. If a unified IP address of service servers is configured on the DHCP server, the DHCP server may select the unified IP address for the service server. The DHCP server delivers the IP address of the service server and the IP address of the terminal to the terminal via a DHCP answer message. In an embodiment, the DHCP answer message is sent to the terminal via the BRAS. Before forwarding the DHCP answer message, the BRAS may remove the physical address of the terminal from the DHCP answer message.

In addition, to ensure the security of automatic acquisition of the IP address of the terminal by DHCP, the DHCP server may authenticate the validity of the terminal first, so as to prevent an illegal user from attacking the network by maliciously exhausting the IP address resources of the network. For example, the DHCP server may store the mapping relationship between the physical addresses of terminals and service information of terminal users, generate a list of the mapping relationship between the physical addresses of terminals and service information of terminal users. When parsing the physical address of a terminal from a DHCP request, the DHCP server queries whether the physical address of the terminal is stored in the list. If the physical address of the terminal is stored in the list, it is indicated that the terminal is a legal terminal. If the physical address of the terminal is not stored in the list, it is indicated that the terminal is an illegal terminal, and the DHCP server does not allocate an IP address for the illegal terminal. If the DHCP server has preconfigured a mapping relationship between the IP address and the physical address of the terminal, the DHCP server may allocate the IP address for the terminal according to the preconfigured mapping relationship. If the DHCP server has not preconfigured a mapping relationship between the IP address and the physical address of the terminal, the DHCP server may randomly select an available IP address for the terminal.

In step 304, when obtaining the IP address of the terminal and the IP address of the service server, the terminal initiates a service request to the service server according to the IP address of the service server. The service request may include the IP address of the terminal.

In step 305, when receiving the service request, the service server determines the physical address of the terminal according to the IP address of the terminal carried in the service request and the mapping relationship between the physical address and the IP address of the terminal sent from the DHCP server, determines a service applied for by the terminal user according to the determined physical address of the terminal and the mapping relationship between the physical address of the terminal and service information of the terminal user stored in the service server, and provides the service to the terminal.

In addition, in step 303, the DHCP server may send the mapping relationship between the physical address and the IP address of the terminal to the service server before sending the IP address of the terminal and the IP address of the service server to the terminal, to prevent the situation that the service server may reject to provide the service to the terminal because of an inconsistency between the physical address of the terminal reported to the service server by the DHCP server and the IP address of the terminal.

If the DHCP server does not send the mapping relationship between the physical address and the IP address of the terminal to the service server in step 303, in step 305, the service server may query the DHCP server for the physical address of the terminal corresponding to the IP address of the terminal carried in the service request when the service server receives the service request initiated from the terminal.

***Embodiment 2***

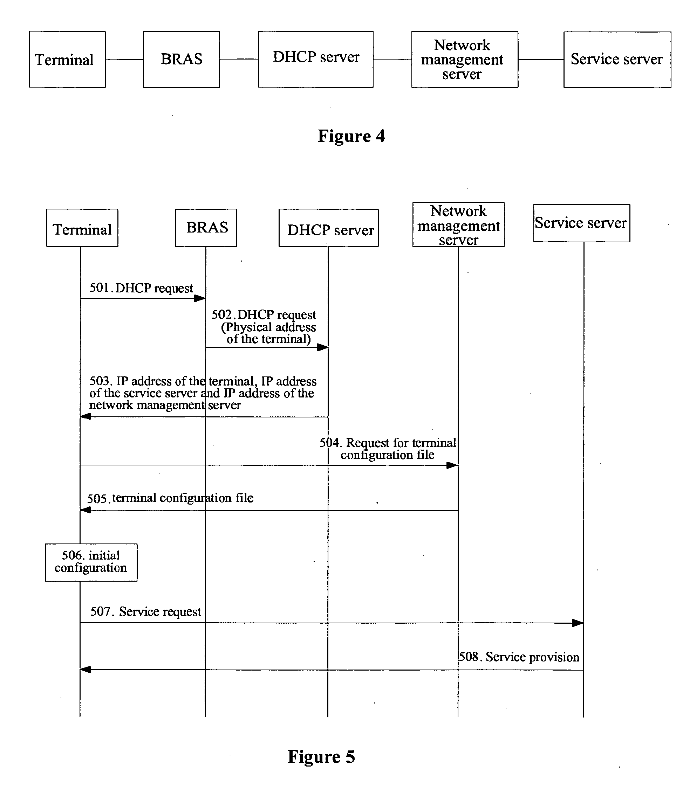

Figure 4 illustrates a system for service provision including a terminal without an initial configuration. As shown in Figure 4, the system for service provision according to the embodiment may further include a network management server in comparison with that as shown in Figure 2. The terminal is further adapted to send a request to the network management server requesting the network management server to provide a terminal configuration file, and receive the terminal configuration file sent from the network management server, to perform an initial configuration. The network management server is adapted to receive the request from the terminal, and return the terminal configuration file to the terminal.

A mapping relationship between the physical address of the terminal and the terminal configuration file may be preconfigured on the network management server. The terminal configuration file may include terminal software and terminal configuration parameters. The terminal software is application programs operating in an embedded operation system on the terminal. The terminal configuration parameters include related configuration parameters (e.g. terminal identifier, and ports used by the terminal) of the terminal and some configuration parameters (e.g. user name and password for accessing the service server, numbers of accessed ports, and service identifiers) of services. The terminal configuration parameters may be different from one terminal to another.

Figure 5 illustrates a method for service provision according to the embodiment. The method is described below in conjunction with the system as shown in Figure 4. As shown in Figure 5, the method is as follows.

Steps 501-502 are same as steps 301-302 respectively, and are not repeated herein.

Step 503 is similar to step 303. The difference lies in that, in addition to sending the IP address allocated to the terminal and the IP address of the service server to the terminal, the DHCP server further determines the IP address of the network management server, sends the IP address of the network management server to the terminal, and sends the mapping relationship between the physical address and the IP address of the terminal to the network management server.

If a mapping relationship between the physical address of the terminal and the IP address of the network management server is configured on the DHCP server, the DHCP server may find the IP address of the network management server according to the parsed physical address of the terminal and the mapping relationship between the physical address of the terminal and the IP address of the network management server. If a unified IP address of network management servers is configured on the DHCP server, the DHCP server may select the unified IP address for the network management server. The DHCP server delivers the IP address of the network management server, the IP address of the service server and relevant network configuration parameters (such as mask, domain name server, domain name, and route information) including the IP address of the terminal to the terminal via a DHCP answer message. For example, the DHCP server may return the mask via OPTION 1 in the DHCP answer message, return the route information via OPTION3 in the DHCP answer message, return the domain name server via OPTION6 in the DHCP answer message, return the domain name via OPTION 15 in the DHCP answer message, return the IP address of the network management server via OPTION43 in the DHCP answer message, and return the IP address of the service server via OPTION120 in the DHCP answer message.

In step 504, when the terminal obtains its own IP address and the IP address of the network management server, the terminal registers to the network management server, sends a request to the network management server requesting the network management server to provide a terminal configuration file. The request may carry the IP address of the terminal.

In step 505, when receiving the request from the terminal, the network management server determines the physical address of the terminal initiating the request according to the IP address of the terminal carried in the request and the mapping relationship between the physical address and the IP address of the terminal sent from the DHCP server, determines the terminal configuration file corresponding to the terminal according to the physical address of the terminal and a mapping relationship between the physical address of the terminal and the terminal configuration file, and sends the terminal configuration file to the terminal.

If the terminal configuration file corresponding to the terminal has not been configured on the network management server, the network management server may generate the terminal configuration file dynamically.

If the DHCP server does not send the mapping relationship between the physical address and the IP address of the terminal to the network management server in step 503, in step 505, the network management server may query the DHCP server for the physical address of the terminal corresponding to the IP address of the terminal carried in the request when the network management server receives the request initiated from the terminal.

In step 506, the terminal receives the terminal configuration file sent from the network management server, and completes an initial configuration.

Steps 507-508 are same as steps 304-305 respectively, and are not repeated herein.

The IP address of the service server may be delivered to the terminal by the network management server when the network management server delivers the terminal configuration file, instead of being delivered by the DHCP server.

In addition, when detecting that the terminal is off line, the DHCP server may send a request to the service server and the network management server requesting to remove the bonding relationship of the IP addresses, so as to release the IP address allocated to the terminal, thereby saving the IP address resources.

While the object, the technical solutions and the beneficial effects of the invention have been described above, it shall be appreciated that the invention should not be limited to these. Any modifications, equivalent substitutions and improvements made within the scope of the invention should be covered within the protection scope of the invention.

## Claims

1. A method for service provision, **characterized in that**, the method comprises:
when receiving a dynamic host configuration protocol request from a terminal, inserting, by a broadband remote access server, a physical address of the terminal into the dynamic host configuration protocol request, and sending the dynamic host configuration protocol request with the physical address of the terminals to a dynamic host configuration protocol server,
parsing, by the dynamic host configuration protocol server, the physical address of the terminal from the dynamic host configuration protocol request received, allocating an Internet Protocol address for the terminal when the physical address is legal, generating a mapping relationship between the physical address and the Internet Protocol address of the terminal, sending the generated mapping relationship between the physical address and the Internet Protocol address of the terminal to a service server, and sending the allocated Internet Protocol address to the terminal;
when receiving a service request from the terminal, determining, by the service server, the physical address of the terminal initiating the service request according to the Internet Protocol address of the terminal carried in the service request and the mapping relationship between the Internet Protocol address and the physical address of the terminal received from the dynamic host configuration protocol server; and
determining, by the service server, a service applied for by the terminal user according to the physical address of the terminal and the mapping relationship between the physical address of the terminal and the service information of the terminal user stored in the service server, and providing the service to the terminal.

2. The method according to claim 1, **characterized in that**, before the process of sending a service request to the service server, the method further comprises: obtaining, by the terminal, an Internet Protocol address of the service server,
the process of sending a service request to the service server comprises: sending, by the terminal, a service request, carrying the Internet Protocol address of the terminal, to the service server according to the Internet Protocol address of the service server, and
the obtaining by the terminal the Internet Protocol address of the service server comprises:
when receiving the dynamic host configuration protocol request, determining, by the dynamic host configuration protocol server, the Internet Protocol address of the service server, and sending the Internet Protocol address of the service server to the terminal.

3. The method according to claim 1 or 2, **characterized in that**, the method further comprises: storing the mapping relationship between the physical address of the terminal and the service information of the terminal user on the dynamic host configuration protocol server, and
before allocating the Internet Protocol address for the terminal, the method further comprises: parsing, by the dynamic host configuration protocol server, the physical address of the terminal from the dynamic host configuration protocol request, and judging whether the physical address of the terminal is contained in the mapping relationship between the physical address of the terminal and the service information of the terminal user stored on the dynamic host configuration protocol server; wherein if the physical address of the terminal is contained in the mapping relationship, the dynamic host configuration protocol server allocates the Internet Protocol address for the terminal, and if the physical address of the terminal is not contained in the mapping relationship, the dynamic host configuration protocol server does not allocate the Internet Protocol address for the terminal.

4. The method according to claim 1 or 2, **characterized in that**, the method further comprises: configuring a mapping relationship between the physical address of the terminal and the Internet Protocol address of the service server on the dynamic host configuration protocol server, wherein
determining the Internet Protocol address of the service server comprises: parsing, by the dynamic host configuration protocol server, the physical address of the terminal from the dynamic host configuration protocol request, determining the Internet Protocol address of the service server according to the parsed physical address of the terminal and the configured mapping relationship between the physical address of the terminal and the Internet Protocol address of the service server.

5. A system for service provision, comprising a terminal, a service server, and a dynamic host configuration protocol server and a broadband remote access server, wherein
the broadband remote access server is adapted to receive a dynamic host configuration protocol request from a terminal, insert a physical address of the terminal into the dynamic host configuration protocol request, and send the dynamic host configuration protocol request with the physical address of the terminal to the dynamic host configuration protocol server,
the dynamic host configuration protocol server is adapted to parse the physical address of the terminal from the dynamic host configuration protocol request received, allocate an Internet Protocol address for the terminal when the physical address is legal, generate a mapping relationship between the physical address and the Internet Protocol address of the terminal, send the generated mapping relationship between the physical address and the Internet Protocol address of the terminal to the service server, and send the allocated Internet Protocol address to the terminal;
the terminal is adapted to send a service request to the service server, and receive a service provided by the service server, the service request carrying the Internet Protocol address of the terminal; and
the service server is adapted to store a mapping relationship between a physical address of the terminal and service information of a terminal user, receive the service request sent from the terminal, determine the physical address of the terminal initiating the service request according to the Internet Protocol address of the terminal carried in the service request and the mapping relationship between the Internet Protocol address and the physical address of the terminal received from the dynamic host configuration protocol server, and determine a service applied for by the terminal user according to the physical address of the terminal and the mapping relationship between the physical address of the terminal and the service information of the terminal user, and provide the service to the terminal.

6. The system according to claim 5, **characterized in that**, the dynamic host configuration protocol server is further adapted to determine an Internet Protocol address of the service server when receiving the dynamic host configuration protocol request, and send the determined Internet Protocol address of the service server to the terminal;
the terminal is further adapted to receive the Internet Protocol address of the service server sent from the dynamic host configuration protocol server.

7. The system according to claim 5, **characterized in that**, the dynamic host configuration protocol server is further adapted to authenticate validity of the terminal.

8. The system according to claim 6, **characterized in that**, a network management server is further adapted to store a mapping relationship between the physical address of the terminal and a terminal configuration file, determine the terminal configuration file corresponding to a terminal according to the physical address of the terminal and the mapping relationship between the physical address of the terminal and the terminal configuration file stored on the network management server.

9. The system according to claim 5, **characterized in that**, the terminal is a set top box STB, or an integrated access device IAD, or a home gateway HGW, or a network telephone Ephone, or a personal computer PC, or any other next generation network terminal.

## Patentansprüche

1. Verfahren zur Dienstbereitstellung, **dadurch gekennzeichnet, dass** das Verfahren Folgendes umfasst:
beim Empfangen einer Dynamic Host Configuration Protocol Anfrage von einem Terminal, Einfügen einer physischen Adresse des Terminals durch einen Broadband Remote Access Server in die Dynamic Host Configuration Protocol Anfrage und Senden der Dynamic Host Configuration Protocol Anfrage mit der physischen Adresse des Terminals an einen Dynamic Host Configuration Protocol Server;
Parsen der physischen Adresse des Terminals durch den Dynamic Host Configuration Protocol Server aus der empfangenen Dynamic Host Configuration Protocol Anfrage, Zuteilen einer Internet Protocol Adresse für das Terminal, wenn die physische Adresse legal ist, Generieren einer Abbildungsbeziehung zwischen der physischen Adresse und der Internet Protocol Adresse des Terminals, Senden der generierten Abbildungsbeziehung zwischen der physischen Adresse und der Internet Protocol Adresse des Terminals an einen Dienstserver und Senden der zugeteilten Internet Protocol Adresse an das Terminal;
beim Empfangen einer Dienstanfrage von dem Terminal, Bestimmen der physischen Adresse des die Dienstanfrage initiierenden Terminals durch den Dienstserver gemäß der Internet Protocol Adresse des Terminals, in der Dienstanfrage geführt, und der Abbildungsbeziehung zwischen der Internet Protocol Adresse und der physischen Adresse des Terminals, von dem Dynamic Host Configuration Protocol Server empfangen; und
Bestimmen eines von dem Terminalbenutzer beantragten Dienstes durch den Dienstserver gemäß der physischen Adresse des Terminals und der Abbildungsbeziehung zwischen der physischen Adresse des Terminals und den Dienstinformationen des Terminalbenutzers, in dem Dienstserver gespeichert, und Liefern des Dienstes an das Terminal.

2. Verfahren nach Anspruch 1, **dadurch gekennzeichnet, dass** das Verfahren vor dem Prozess des Sendens einer Dienstanfrage an den Dienstserver weiterhin Folgendes umfasst: Erhalten einer Internet Protocol Adresse des Dienstservers durch das Terminal;
der Prozess des Sendens einer Dienstanfrage an den Dienstserver Folgendes umfasst:
Senden einer Dienstanfrage, die die Internet Protocol Adresse des Terminals führt, durch das Terminal an den Dienstserver gemäß der Internet Protocol Adresse des Dienstservers; und
das Erhalten der Internet Protocol Adresse des Dienstservers durch das Terminal Folgendes umfasst:
beim Empfangen der Dynamic Host Configuration Protocol Anfrage, Bestimmen der Internet Protocol Adresse des Dienstservers durch den Dynamic Host Configuration Protocol Server und Senden der Internet Protocol Adresse des Dienstservers an das Terminal.

3. Verfahren nach Anspruch 1 oder 2, **dadurch gekennzeichnet, dass** das Verfahren weiterhin Folgendes umfasst:
Speichern der Abbildungsbeziehung zwischen der physischen Adresse des Terminals und den Dienstinformationen des Terminalbenutzers auf dem Dynamic Host Configuration Protocol Server; und
vor dem Zuteilen der Internet Protocol Adresse für das Terminal das Verfahren weiterhin Folgendes umfasst: Parsen der physischen Adresse des Terminals durch den Dynamic Host Configuration Protocol Server aus der Dynamic Host Configuration Protocol Anfrage und Beurteilen, ob die physische Adresse des Terminals in der Abbildungsbeziehung zwischen der physischen Adresse des Terminals und den Dienstinformationen des Terminalbenutzers, in dem Dynamic Host Configuration Protocol Server gespeichert, enthalten ist; wobei, falls die physische Adresse des Terminals in der Abbildungsbeziehung enthalten ist, der Dynamic Host Configuration Protocol Server die Internet Protocol Adresse für das Terminal zuteilt, und falls die physische Adresse des Terminals nicht in der Abbildungsbeziehung enthalten ist, der Dynamic Host Configuration Protocol Server die Internet Protocol Adresse für das Terminal nicht zuteilt.

4. Verfahren nach Anspruch 1 oder 2, **dadurch gekennzeichnet, dass** das Verfahren weiterhin Folgendes umfasst: Konfigurieren einer Abbildungsbeziehung zwischen der physischen Adresse des Terminals und der Internet Protocol Adresse des Dienstservers auf dem Dynamic Host Configuration Protocol Server; wobei Bestimmen der Internet Protocol Adresse des Dienstservers Folgendes umfasst:
Parsen der physischen Adresse des Terminals durch den Dynamic Host Configuration Protocol Server aus der Dynamic Host Configuration Protocol Anfrage, Bestimmen der Internet Protocol Adresse des Dienstservers gemäß der geparsten physischen Adresse des Terminals und der konfigurierten Abbildungsbeziehung zwischen der physischen Adresse des Terminals und der Internet Protocol Adresse des Dienstservers.

5. System zur Dienstbereitstellung, umfassend ein Terminal, einen Dienstserver und einen Dynamic Host Configuration Protocol Server und einen Broadband Remote Access Server, wobei
der Broadband Remote Access Server ausgelegt ist zum Empfangen einer Dynamic Host Configuration Protocol Anfrage von einem Terminal, Einfügen einer physischen Adresse des Terminals in die Dynamic Host Configuration Protocol Anfrage und Senden der Dynamic Host Configuration Protocol Anfrage mit der physischen Adresse des Terminals an den Dynamic Host Configuration Protocol Server;
der Dynamic Host Configuration Protocol Server ausgelegt ist zum Parsen der physischen Adresse des Terminals aus der empfangenen Dynamic Host Configuration Protocol Anfrage, Zuteilen einer Internet Protocol Adresse für das Terminal, wenn die physische Adresse legal ist, Generieren einer Abbildungsbeziehung zwischen der physischen Adresse und der Internet Protocol Adresse des Terminals, Senden der generierten Abbildungsbeziehung zwischen der physischen Adresse und der Internet Protocol Adresse des Terminals an einen Dienstserver und Senden der zugeteilten Internet Protocol Adresse an das Terminal; das Terminal ausgelegt ist zum Senden einer Dienstanfrage an den Dienstserver und Empfangen eines von dem Dienstserver bereitgestellten Dienstes, wobei die Dienstanfrage die Internet Protocol Adresse des Terminals führt; und
der Dienstserver ausgelegt ist zum Speichern einer Abbildungsbeziehung zwischen einer physischen Adresse des Terminals und Dienstinformationen eines Terminalbenutzers, Empfangen der von dem Terminal gesendeten Dienstanfrage, Bestimmen der physischen Adresse des Internet Protocol Adresse des Terminals initiierenden Terminals die Dienstanfrage gemäß der in der Dienstanfrage geführt, und der Abbildungsbeziehung zwischen der Internet Protocol Adresse und der physischen Adresse des Terminals, von dem Dynamic Host Configuration Protocol Server empfangen, und Bestimmen eines von dem Terminalbenutzer beantragten Dienstes gemäß der physischen Adresse des Terminals und der Abbildungsbeziehung zwischen der physischen Adresse des Terminals und den Dienstinformationen des Terminalbenutzers und Liefern des Dienstes an das Terminal.

6. System nach Anspruch 5, **dadurch gekennzeichnet, dass** der Dynamic Host Configuration Protocol Server weiterhin ausgelegt ist zum Bestimmen einer Internet Protocol Adresse des Dienstservers beim Empfangen der Dynamic Host Configuration Protocol Anfrage und Senden der bestimmten Internet Protocol Adresse des Dienstservers an das Terminal;
das Terminal weiterhin ausgelegt ist zum Empfangen der von dem Dynamic Host Configuration Protocol Server gesendeten Internet Protocol Adresse des Dienstservers.

7. System nach Anspruch 5, **dadurch gekennzeichnet, dass** der Dynamic Host Configuration Protocol Server weiterhin ausgelegt ist zum Authentisieren der Gültigkeit des Terminals.

8. System nach Anspruch 6, **dadurch gekennzeichnet, dass** ein Netzwerk Management Server weiterhin ausgelegt ist zum Speichern einer Abbildungsbeziehung zwischen der physischen Adresse des Terminals und einer Terminalkonfigurationsdatei, Bestimmen der Terminalkonfigurationsdatei entsprechend dem Terminal gemäß der physischen Adresse des Terminals und der Abbildungsbeziehung zwischen der physischen Adresse des Terminals und der auf dem Netzwerk Management Server gespeicherten Terminalkonfigurationsdatei.

9. System nach Anspruch 5, **dadurch gekennzeichnet, dass** das Terminal eine Set-Top-Box STB oder ein integriertes Zugriffsgerät IAD (Integrated Access Device) oder ein Home Gateway HGW oder ein Netzwerktelefon (Ephone) oder ein Personal Computer PC oder irgendein anderes Netzwerkterminal der nächsten Generation ist.

## Revendications

1. Procédé de prestation de services, **caractérisé en ce que** le procédé comprend :
lors de la réception d'une demande au protocole de configuration dynamique d'hôte issue d'un terminal, l'insertion par le serveur à large bande d'accès à distance, d'une adresse physique du terminal dans la demande au protocole de configuration dynamique d'hôte et l'envoi à un serveur au protocole de configuration dynamique d'hôte de la demande au protocole de configuration dynamique d'hôte avec l'adresse physique du terminal,
l'analyse, par le serveur de protocole de configuration dynamique d'hôte, de l'adresse physique du terminal à partir de la demande reçue au protocole de configuration dynamique d'hôte, l'allocation d'une adresse au protocole Internet pour le terminal lorsque l'adresse physique est légale, la génération d'une relation de mappage entre l'adresse physique et l'adresse au protocole Internet du terminal, l'envoi à un serveur de services de la relation de mappage générée entre l'adresse physique et l'adresse au protocole Internet du terminal, ainsi que l'envoi au terminal de l'adresse allouée au protocole Internet,
lors de la réception d'une demande de service issue du terminal, la détermination, par le serveur de services, de l'adresse physique du terminal provoquant la demande de service en fonction de l'adresse au protocole Internet du terminal transportée dans la demande de service et la relation de mappage entre l'adresse au protocole Internet et
l'adresse physique du terminal reçue du serveur au protocole de configuration dynamique d'hôte, et
la détermination, par le serveur de services, d'un service demandé par l'utilisateur du terminal en fonction de l'adresse physique du terminal et de la relation de mappage entre l'adresse physique du terminal et les informations de service de l'utilisateur du terminal mémorisées dans le serveur de services, ainsi que la fourniture du service au terminal.

2. Procédé selon la revendication 1, **caractérisé en ce que**, avant le processus d'envoi d'une demande de service au serveur de services, le procédé comprend en outre : la récupération, par le terminal, d'une adresse au protocole Internet du serveur de services,
le processus d'envoi d'une demande de service au serveur de services comprend :
l'envoi au serveur de services, par le terminal, d'une demande de service transportant l'adresse au protocole Internet du terminal en fonction de l'adresse au protocole Internet du serveur de services, et
la récupération par le terminal de l'adresse au protocole Internet du serveur de services comprend :
lors de la réception de la demande au protocole de configuration dynamique d'hôte, la détermination, par le serveur au protocole de configuration dynamique d'hôte, de l'adresse au protocole Internet du serveur de services et l'envoi au terminal de l'adresse au protocole Internet du serveur de services.

3. Procédé selon la revendication 1 ou 2, **caractérisé en ce que** le procédé comprend en outre : la mémorisation de la relation de mappage entre l'adresse physique du terminal et les informations de service de l'utilisateur du terminal sur le serveur au protocole de configuration dynamique d'hôte, et
avant l'allocation de l'adresse au protocole Internet pour le terminal, le procédé comprend en outre : l'analyse, par le serveur au protocole de configuration dynamique d'hôte, de l'adresse physique du terminal à partir de la demande au protocole de configuration dynamique d'hôte, ainsi que l'évaluation du fait que l'adresse physique du terminal est contenue ou non dans la relation de mappage entre l'adresse physique du terminal et les informations de service de l'utilisateur du terminal mémorisées sur le serveur au protocole de configuration dynamique d'hôte, dans lequel, si l'adresse physique du terminal est contenue dans la relation de mappage, le serveur au protocole de configuration dynamique d'hôte alloue l'adresse au protocole Internet au terminal, et si l'adresse physique du terminal n'est pas contenue dans la relation de mappage, le serveur au protocole de configuration dynamique d'hôte n'alloue pas d'adresse au protocole Internet au terminal.

4. Procédé selon la revendication 1 ou 2, **caractérisé en ce que** le procédé comprend en outre : la configuration d'une relation de mappage entre l'adresse physique du terminal et l'adresse au protocole Internet du serveur de services sur le serveur au protocole de configuration dynamique d'hôte, dans lequel
la détermination de l'adresse au protocole Internet du serveur de services comprend :
l'analyse, par le serveur au protocole de configuration dynamique d'hôte, de l'adresse physique du terminal à partir de la demande au protocole de configuration dynamique d'hôte, la détermination de l'adresse au protocole Internet du serveur de services en fonction de l'adresse physique analysée du terminal et de la relation de mappage configurée entre l'adresse physique du terminal et l'adresse au protocole Internet du serveur de services.

5. Système de prestation de services, comprenant un terminal, un serveur de services et un serveur au protocole de configuration dynamique d'hôte, ainsi qu'un serveur à large bande d'accès à distance, dans lequel
le serveur à large bande d'accès à distance est conçu pour recevoir une demande au protocole de configuration dynamique d'hôte provenant d'un terminal, pour insérer une adresse physique du terminal dans la demande au protocole de configuration dynamique d'hôte et pour envoyer la demande au protocole de configuration dynamique d'hôte avec l'adresse physique du terminal vers le serveur au protocole de configuration dynamique d'hôte,
le serveur au protocole de configuration dynamique d'hôte est conçu pour analyser l'adresse physique du terminal à partir de la demande reçue au protocole de configuration dynamique d'hôte, pour allouer une adresse au protocole Internet au terminal lorsque l'adresse physique est légale, pour générer une relation de mappage entre l'adresse physique et l'adresse au protocole Internet du terminal, pour envoyer au serveur de services la relation de mappage générée entre l'adresse physique et l'adresse au protocole Internet du terminal et pour envoyer au terminal l'adresse allouée au protocole Internet,
le terminal est conçu pour envoyer une demande de service au serveur de services et pour recevoir un service fourni par le serveur de services, la demande de service transportant l'adresse au protocole Internet du terminal, et
le serveur de services est conçu pour mémoriser une relation de mappage entre une adresse physique du terminal et des informations de service d'un utilisateur du terminal, pour recevoir la demande de service envoyée à partir du terminal, pour déterminer l'adresse physique du terminal provoquant la demande de service en fonction de l'adresse au protocole Internet du terminal transportée dans la demande de service et la relation de mappage entre l'adresse au protocole Internet et l'adresse physique du terminal reçue du serveur au protocole de configuration dynamique d'hôte, ainsi que pour déterminer un service demandé par l'utilisateur du terminal en fonction de l'adresse physique du terminal et de la relation de mappage entre l'adresse physique du terminal et les informations de service de l'utilisateur du terminal, tout comme pour fournir le service au terminal.

6. Système selon la revendication 5, **caractérisé en ce que** le serveur au protocole de configuration dynamique d'hôte est en outre conçu pour déterminer une adresse au protocole Internet du serveur de services à la réception de la demande au protocole de configuration dynamique d'hôte et pour envoyer au terminal l'adresse déterminée au protocole Internet du serveur de services,
le terminal est en outre conçu pour recevoir l'adresse au protocole Internet du serveur de services envoyée depuis le serveur au protocole de configuration dynamique d'hôte.

7. Système selon la revendication 5, **caractérisé en ce que** le serveur au protocole de configuration dynamique d'hôte est en outre conçu pour authentifier la validité du terminal.

8. Système selon la revendication 6,
**caractérisé en ce qu'**un serveur de gestion de réseaux est en outre conçu pour mémoriser une relation de mappage entre l'adresse physique du terminal et un fichier de configuration du terminal, pour déterminer le fichier de configuration du terminal correspondant au terminal en fonction de l'adresse physique du terminal et la relation de mappage entre l'adresse physique du terminal et le fichier de configuration du terminal mémorisé sur le serveur de gestion de réseaux.

9. Système selon la revendication 5, **caractérisé en ce que** le terminal est un décodeur STB, ou un dispositif à accès intégré IAD, ou une passerelle domestique HGW, ou un téléphone de réseau de type Ephone, ou un ordinateur personnel PC, ou tout autre terminal de réseau de la génération suivante.
